# EUROPEAN PATENT SPECIFICATION

(11) **EP 0 981 752 B1**
(45) Date of publication and mention of the grant of the patent: **21.07.2004**
(21) Application number: 98922005.8
(22) Date of filing: 13.05.1998
(51) Int. Cl.: G01P 13/04

(54) **FLOW INDICATOR**
STRÖMUNGSANZEIGER
INDICATEUR DE DEBIT

(30) Priority: 13.05.1997 SE 9701801
(43) Date of publication of application: 01.03.2000
(73) Proprietor: Nyberg, Tord, 151 81 Lidingö (SE)
(72) Inventor: Nyberg, Tord, 151 81 Lidingö (SE)
(74) Representative: Sedvall, Bengt Gustaf
(86) International application number: PCT/SE1998/000892
(87) International publication number: WO 1998/052050

(56) References cited:
- DE-A- 2 913 477
- US-A- 5 195 376
- US-A- 5 589 643

## Description

The present invention refers to a flow indicator of the kind that is stated in the preamble of claim 1.

Within many buildings, as industrial departments, laboratories etc, it is of importance to know the direction of the air flow between rooms. In manufacturing of pharmaceuticals as for an example this information is essential to prevent contaminated air to flow in the wrong direction. The flow indicators that are known have solved this with a "flap" or other suitable means in an opening between the rooms to show the direction of the air flow. A disadvantage is however that if an airflow is obtained in the wrong direction unacceptable air will flow in to the protected room before any steps to change the direction of the flow or the pressure difference has been taken.

US-A-5,195,376 discloses a fluid pressure differential monitoring device, comprising a tubular housing with end stops ("retaining pin") containing at least one spherical body of a diameter slightly less than the internal diameter of the tubular housing.

GB-A-2244337 discloses a device for measuring fluid flow through a system, comprising a tube and a piston or diaphragm device sealingly arranged in the tube to be freely movable therein between end plugs at an inlet and an outlet end. The plugs are respectively provided with connections by which the tube may be connected to a system, to carry the fluid flow through that system which it is desired to be measured.

The object of the present invention is to achive an flow indicator that eliminates the disadvantages mentioned above in connection with known flow indicators.

This task is solved by giving the flow indicator according to the invention the characteristics specified in the enclosed patent claims.

The invention will now be described closer with reference to an embodiment shown in the drawings.

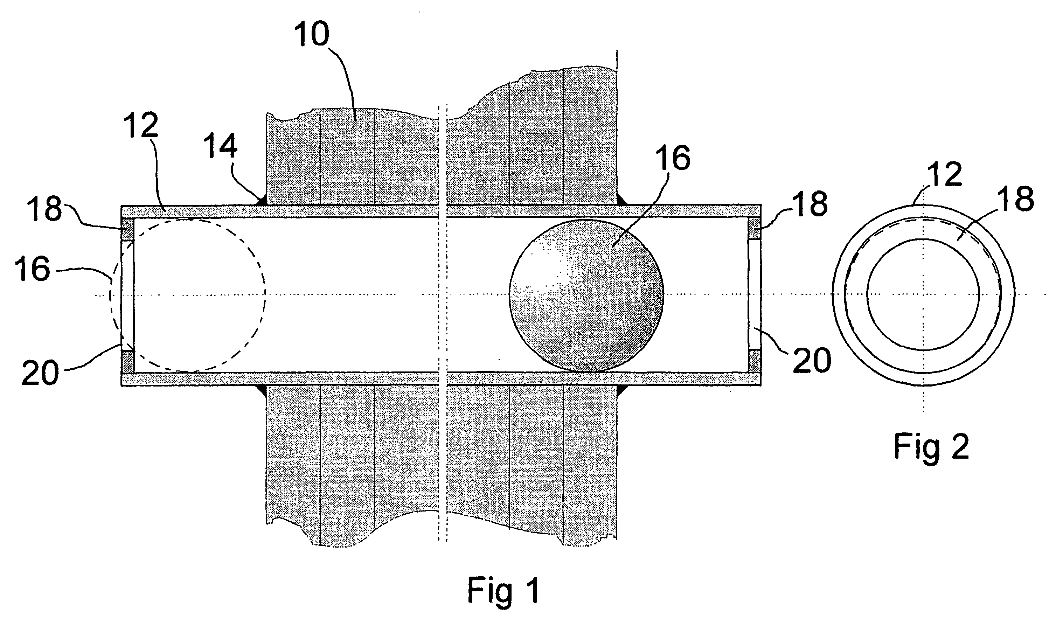

Figure 1 shows the flow indicator cut lengthwised inside a wall. Figure 2 shows the flow indicator in a cross-cut view.

In the wall 10 a hole is made in which a tube 12 is mounted. The material of tube can be for an example plastic, glass, or other similar material, preferably transparent. The tube 12 has a small tolerance in relation to the opening in the wall and is preferably sealed against both side of the wall with a suitable sealing material 14. Inside the tube 12 a smooth-running solid body 16 is placed which is the enbodiment shown has a spherical shape and which easily moves inside the tube under influence of an even light airflow.

The body 16 can be made of a thin plastic material of the same kind as table tennis balls. At both ends of the tube there are end-stops 18 that prevents the body 16 to leave the tube. The end-stop is provided with an opening 20 that makes it possible for the air to pass into the tube 12 and move the smooth-running body 16.

If the flow indicator is placed between rooms with different pressures the function of the described flow indicator is that the body 16 placed in the tube 12 moves towards the end-stop that faces the room with the lowest pressure because of the arised air flow. As the body moves with small tolerance in relation to the wall of the tube, only a fragment of the flow will pass between the rooms and when the body reaches the end-stop 18 it will generate a complete sealing that stops air to pass in to the room with the lower pressure. As the tube is made by transparent material the body 16 is easy to see and if the body is spherical, as in the example, a part of spheroids perimeter will pop out at the opening 20 of the end-stop 18 and the direction of the air flow can easily be detected.

Of course the shown embodiment is only an example of the invention and can easily be changed within the scope of the enclosed patent claims. Thus can the body 16 instead of a spheroid be in a shape of an cylindrical piston that moves easily in the tube 12 and with its end surface seales towards the end-stop 18.

## Claims

1. Flow indicator with the purpose to indicate in each of two rooms a direction of air flow between the two rooms sepatared by a wall (10), comprising a cylindrical tube (12) that is mounted with a small tolerance through the wall and sealed in an opening of the wall (10) to provide an air connection between the two rooms, a smooth-running body (16) arranged inside the tube, the body being adapted to easily move between opposite ends of the tube (12) due to an air flow arising from a pressure difference between the two rooms, and end-stops (18) provided at the ends of the tube (12) and arranged to prevent the body (16) from leaving the tube and further being provided with openings (20) which are adapted to admit air to pass into the tube and which are so shaped that when in use, the body reaches one of the end stops, sealingly closes the opening (20) of the one end stop (18) to prevent air to flow through the tube (12),
**characterized in that** the body (16) being spherical, such as a ball, and **in that** the end-stops (18) and the openings being dimensioned such that a part of the spherical body (16) pops out outside the opening when the body (16) is sealingly closing the opening (20) to thereby provide a visual indication in each of the two rooms of the direction of air flow.

2. Flow indicator according to claim 1, **characterized in that** the cylindrical tube (12) outer surface is sealed against the wall.

3. Flow indicator according to claim 1 or 2, **characterized in that** the cylindrical tube (12) being of a transparent material such as to form a plastic tube clear as glass with its ends extending outside the wall (10).

## Patentansprüche

1. Strömungsanzeiger mit dem Zweck in jedem von zwei Räumen eine Luftstromrichtung zwischen den beiden Räumen anzuzeigen, die mittels einer Wand (10) getrennt sind, aufweisend: ein zylindrisches Rohr (12), das mit ein geringen Spielraum durch die Wand hindurch eingesetzt ist und das in einer Öffnung der Wand (10) abgedichtet ist, um eine Luftverbindung zwischen den beiden Räumen bereitzustellen, einen leichtgängigen Körper (16), der innerhalb des Rohrs angeordnet ist, wobei der Körper so angepasst ist, dass er sich leicht infolge eines aus einer Druckdifferenz zwischen den beiden Räumen resultierenden Luftstroms zwischen gegenüberliegenden Enden des Rohrs (12) bewegt, und Endanschläge (18), die an den Enden des Rohrs (12) ausgebildet sind und die vorgesehen sind, um zu verhindern, dass der Körper (16) das Rohr verlässt, und die ferner mit Öffnungen (20) versehen sind, welche so angepasst sind, dass sie ein Passieren von Luft in das Rohr hinein zulassen, und welche so geformt sind, dass, wenn im Betrieb der Körper einen der Endanschläge erreicht, er die Öffnung (20) des einen Endanschlags (18) dichtend verschließt, um ein Strömen von Luft durch das Rohr (12) hindurch zu verhindern, **dadurch gekennzeichnet, dass** der Körper (16) sphärisch ist, wie beispielsweise eine Kugel, und dass die Endanschläge 18 und die Öffnungen derart dimensioniert sind, dass ein Teil des sphärischen Körpers (16) außerhalb der Öffnung hervorsteht, wenn der Körper (16) die Öffnung (20) dichtend verschließt, um dadurch in jedem der beiden Räume eine Sichtanzeige für die Luftstromrichtung bereitzustellen.

2. Strömungsanzeiger gemäß Anspruch 1, **dadurch gekennzeichnet, dass** die Außenfläche des zylindrischen Rohrs (12) gegen die Wand abgedichtet ist.

3. Strömungsanzeiger gemäß Anspruch 1 oder 2, **dadurch gekennzeichnet, dass** das zylindrische Rohr (12) aus einem transparenten Material ist, um beispielsweise ein Kunststoffrohr zu formen, das durchsichtig wie Glas ist und das sich mit seinen Enden außerhalb der Wand (10) erstreckt.

## Revendications

1. Indicateur de débit ayant pour fonction d'indiquer dans chacune de deux pièces une direction de circulation d'air entre les deux pièces séparées par une paroi (10), comprenant un tube cylindrique (12) qui est monté avec une faible tolérance dans la paroi et étanché dans une ouverture de la paroi (10) pour réaliser une connexion d'air entre les deux pièces, un corps à déplacement doux (16) disposé à l'intérieur du tube, le corps étant adapté à se déplacer facilement entre des extrémités opposées du tube (12) en raison d'un écoulement d'air provenant d'une différence de pression entre les deux pièces, et des butées de fin de course (18) situées aux extrémités du tube (12) et agencées de façon à empêcher le corps (16) de quitter le tube et étant en outre doté d'ouvertures (20) qui sont adaptées à admettre de l'air à passer dans le tube et qui sont façonnées de sorte telle que, en service, le corps atteigne l'une des butées de fin de course, ferme hermétiquement l'ouverture (20) de ladite une butée de fin de course (18) pour empêcher l'air de s'écouler à travers le tube (12), **caractérisé en ce que** le corps (16) est sphérique, tel qu'une bille, et **en ce que** les butées de fin de course (18) et les ouvertures sont dimensionnées de telle sorte qu'une partie du corps sphérique (16) fasse saillie à l'extérieur de l'ouverture lorsque le corps (16) ferme hermétiquement l'ouverture (20) afin de fournir ainsi une indication visuelle dans chacune des deux pièces de la direction d'écoulement d'air.

2. Indicateur de débit selon la revendication 1, **caractérisé en ce que** la surface externe du tube cylindrique (12) est étanchée contre la paroi.

3. Indicateur de débit selon la revendication 1 ou 2, **caractérisé en ce que** le tube cylindrique (12) est fait d'un matériau transparent afin de former un tube en plastique transparent comme le verre avec ses extrémités s'étendant à l'extérieur du mur (10).
